# DEMANDE DE BREVET EUROPEEN

(11) **EP 1 918 243 A1**
(43) Date de publication de la demande: **07.05.2008**
(21) Numéro de dépôt: 07364010.4
(22) Date de dépôt: 10.10.2007
(51) Int. Cl.: B66F 7/24, B60T 3/00, B60P 3/32

(54) **Dispositif de calage multiposition pour roue de véhicule de loisir notamment camping-car**

(30) Priorité: 31.10.2006 FR 0609539; 11.12.2006 FR 0610755
(71) Demandeur: Brousse, Hervé, 29140 Melvgen (FR); Brousse, Madeleine, 29140 Melvgen (FR)
(72) Inventeur: Brousse, Hervé, 29140 Melvgen (FR); Brousse, Madeleine, 29140 Melvgen (FR)

(57) **Abrégé**

L'invention concerne un dispositif multiposition permettant le calage et la stabilisation d'un véhicule de loisir notamment camping car.

Il est constitué d'une pièce rigide de section longitudinale en T inégal (1) pourvue de stries antidérapantes (2) de biseau (4) facilitant l'accès de deux trous (3) permettant de recevoir les ergots (6) de la came amovible (5) permettant son basculement, ou en variante les ergots (9) du bossage amovible (8).

Le profil en T inégal de la semelle (1) permet par retournement différentes hauteurs de calage en combinaison avec l'entretoise (7) et la came (5) ou le bossage (8).

Le dispositif multipositions selon l'invention est particulièrement destiné à la stabilisation et la mise de niveau + ou -- des véhicules de loisir notamment camping car.

## Description

La présente invention concerne un dispositif multipositions pour caler un véhicule de loisir notamment camping car + ou -- de niveau.

Les cales en forme de coin utilisées traditionnellement, sollicitent intempestivement le frein de secours.

Le dispositif selon l'invention permet de remédier à ces inconvénients. Il comporte en effet une came sur laquelle bascule une semelle de profil en T inégal permettant la mise de niveau stable et sans effort sur le frein de secours pour caler ou décaler.

Les dessins annexés illustrent l'invention:
La figure 1 représente la semelle (1), pièce principale du dispositif.
La figure 2 représente:
   a) La came (5) permettant le basculement.
   b) L'entretoise (7) permettant de changer la hauteur de calage.
   c) Les ergots (6) solidaires de la came (5) permettant le positionnement sur la semelle (1) figure 1.

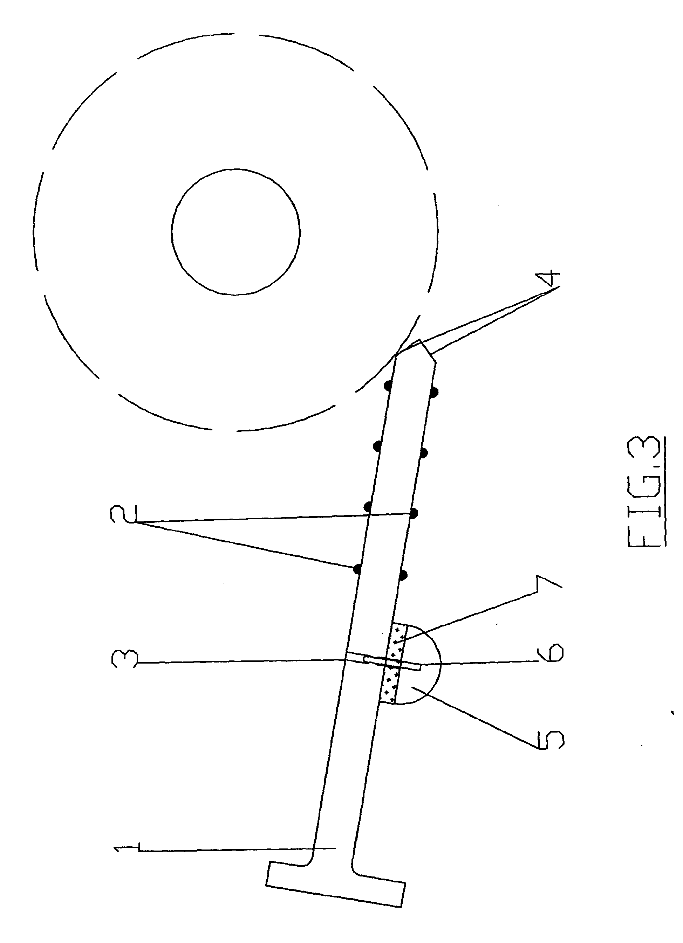

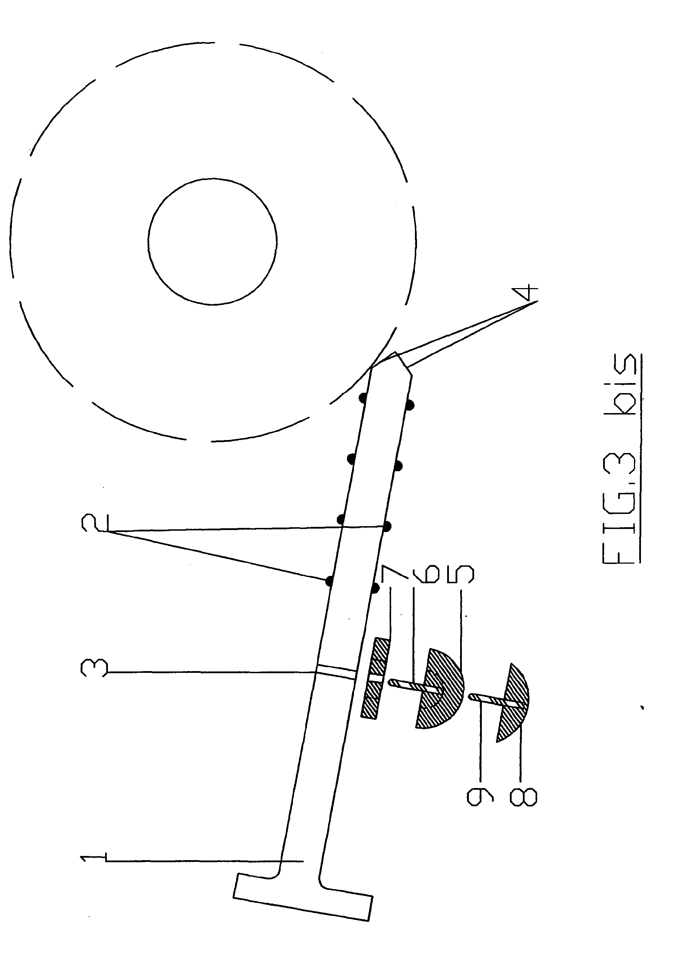

La figure 3 représente un assemblage du dispositif.
La figure 4 représente:
   a) Le bossage (8) anti-flexion permettant le calage de la semelle (1)
   b) Les ergots (9) solidaires du bossage (8) permettant le positionnement sur la semelle (1) figure 1.

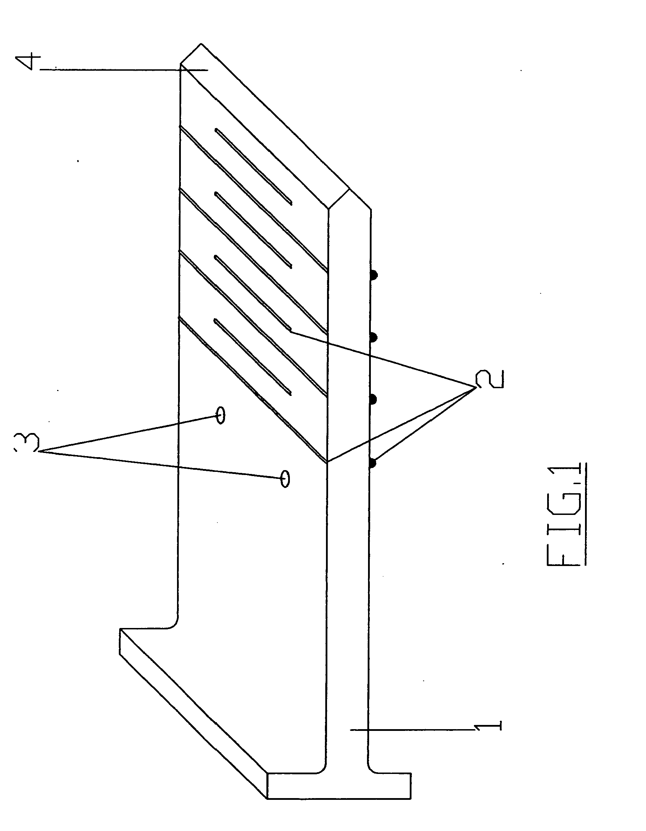

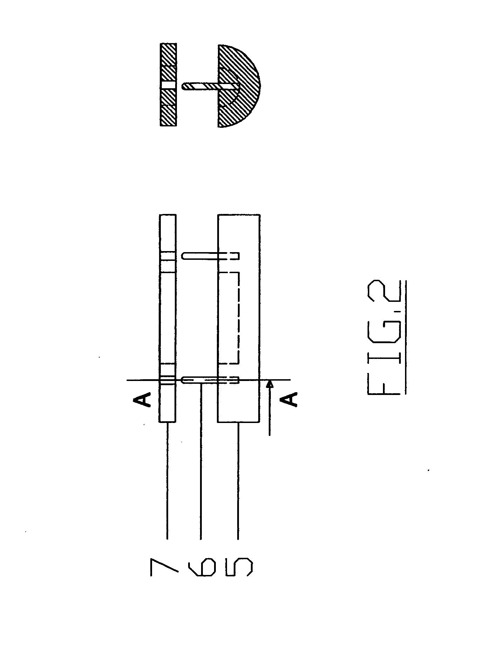

La semelle (1) figure 1 de profil en T inégal comporte sur ses deux faces des des stries antidérapantes (2), un biseau (4) sur les deux faces facilitant l'accès, deux trous (3) permettant le positionnement de la came (5) figure 2 et de l'entretoise (7) figure 2.

Les dimensions de cette pièce sont liées à la dimension des roues les plus utilisées sur véhicule de loisir camping car.

La partie en T inégal de cette pièce permet différentes hauteurs de calage par retournement.

Cette pièce peut être réalisée en matière plastique par opération de moulage par injection.

La came (5) figure 2 de section semi-cylindrique évidée en partie comporte deux ergots (6) figure 2 , de préférence métalliques, permettant le positionnement sur la semelle (1) figure 1 .

L'entretoise (7) évidée en partie figure 2 , comporte deux trous pour le passage des ergots (6) figure 2 ,et vient s'intercaler entre la semelle (1) figure 1 et la came (5) figure 2 , permettant de faire varier la hauteur de calage.

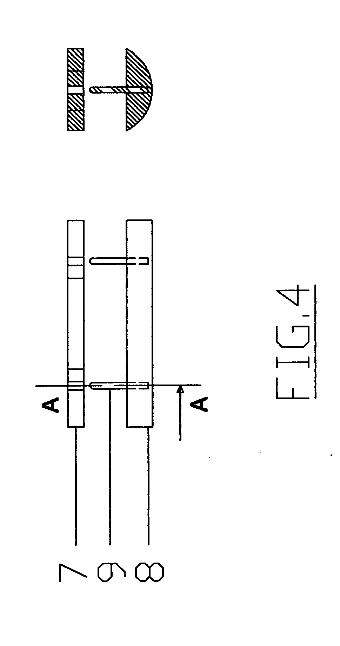

L'entretoise (7) vient ainsi s'intercaler entre la semelle (1) figure let le bossage (8) figure 4, permettant le renfort de la semelle(1) selon la position du calage.

La came (5), l'entretoise (7) figure 2 , et le bossage (8) figure 4, peuvent être réalisées en matière plastique par opération de moulage par injection.

## Revendications

1. Dispositif multipositions pour caler un véhicule de loisir notamment camping car **caractérisé en ce qu'**il est constitué d'une semelle en T inégal (1) comportant une came amovible (5) permettant son basculement.

2. Dispositif multipositions selon la revendication 1 **caractérisé en ce que** la came (5), constituée d'une pièce semi cylindrique rigide munie de deux ergots (6) permettant le couplage à la semelle. L'ensemble ainsi constitué peut basculer.

3. Dispositif multpositions selon la revendication 1 ou la revendication 2 **caractérisé en ce que** l'entretoise (7) peut être positionnée entre la semelle (1) et la came (5) permettant le changement de hauteur de calage. Et en variante entre la semelle (1) et le bossage anti-flexion (8) pour calage de faibles hauteurs.

4. Dispositif multipositions selon l'une quelconque des revendications précédentes **caractérisé en ce que** la semelle (1) est pourvue de stries antidérapantes (2) sur les deux faces ainsi que deux trous (3) permettant de recevoir les deux ergots (6) afin de stabiliser l'ensemble.

5. Dispositif multipositions selon l'une quelconque des revendications précédentes **caractérisé en ce que** la semelle (1)pourvue d'un biseau sur les deux faces facilitant l'acces.

6. Dispositif multipositions selon l'une quelconque des revendications précédentes **caractérisé en ce que** la semelle (1) de profil en T inégal permet par retournement différentes hauteurs de calage.

7. Dispositif multipositions selon l'une quelconque des revendications precédentes **caractérisé en ce que** le bossage anti-flexion (8) constitué d'une pièce rigide de profil arrondi, muni de deux ergots (9) permet le renfort de la semelle (1) pour calage de faibles hauteurs.
